# EUROPÄISCHE PATENTANMELDUNG

(11) **EP 0 624 607 A1**
(43) Veröffentlichungstag der Anmeldung: **17.11.1994**
(21) Anmeldenummer: 94106804.1
(22) Anmeldetag: 02.05.1994
(51) Int. Cl.: C08F 265/04, C09D 151/00, C09J 151/00, D21H 19/58, D04H 1/64

(54) **Zweistufig aufgebautes Copolymerisat**

(30) Priorität: 12.05.1993 DE 4315881
(71) Anmelder: BASF Aktiengesellschaft, D-67063 Ludwigshafen (DE)
(72) Erfinder: Schumacher, Gerhard, Dr., D-69118 Heidelberg (DE); Dittrich, Uwe, Dr., D-67061 Ludwigshafen (DE); Zettl, Alexander, D-67063 Ludwigshafen (DE)

(57) **Zusammenfassung**

Copolymerisat, erhältlich durch Polymerisation (1. Stufe) von 1 - 99 Gew.-% eines Monomerengemischs A) aus
50 - 100 Gew.-% mindestens eines C₁-C₁₆ Alkyl(meth)acrylats a)
0 - 40 Gew.-% mindestens eines Vinylaromaten mit bis zu 20 C-Atomen b)
0 - 30 Gew.-% mindestens eines nichtaromatischen Diolefins mit bis zu 8 C-Atomen c)
0 - 40 Gew.-% mindestens eines weiteren Monomeren d),
wobei der Gewichtsanteil von b) und c) zusammen maximal 49 Gew.-% beträgt, und
anschließende Polymerisation (2. Stufe) in Gegenwart des aus A) erhaltenen Polymerisats von
1 - 99 Gew.-% eines Monomerengemischs B) aus
50 - 100 Gew.-% einer Mischung aus mindestens je einem Monomeren b) und c)
0 - 40 Gew.-% mindestens eines Monomeren a) und
0 - 40 Gew.-% mindestens eines Monomeren d),
wobei sich die Gewichtsprozente der Monomerengemische A) und B) auf das mindestens zweistufig aufgebaute Copolymerisat beziehen.

## Beschreibung

Die Erfindung betrifft ein Copolymerisat, erhältlich durch Polymerisation (1. Stufe) von
1 - 99 Gew.-% eines Monomerengemischs A) aus
50 - 100 Gew.-% mindestens eines C₁-C₁₆ Alkyl(meth)acrylats a)
0 - 40 Gew.-% mindestens eines Vinylaromaten mit bis zu 20 C-Atomen b)
0 - 30 Gew.-% mindestens eines aliphatischen Diolefins mit bis zu 8 C-Atomen c)
0 - 40 Gew.-% mindestens eines weiteren Monomeren d),
wobei der Gewichtsanteil von b) und c) zusammen maximal 49 Gew.-% beträgt, und
anschließende Polymerisation (2. Stufe) in Gegenwart des aus A) erhaltenen Polymerisats von
1 - 99 Gew.-% eines Monomerengemischs B) aus
50 - 100 Gew.-% einer Mischung aus mindestens je einem Monomeren b) und c)
0 - 40 Gew.-% mindestens eines Monomeren a) und
0 - 40 Gew.-% mindestens eines Monomeren d),
wobei sich die Gewichtsprozente der Monomerengemische A) und B) auf die Summe A) + B) beziehen.

Des weiteren betrifft die Erfindung Klebstoffe und Beschichtungsmittel enthaltend das mindestens zweistufig aufgebaute Copolymerisat.

Anforderungen, die an Copolymerisate im Falle der Verwendung als Klebstoffe, z.B. Haftklebstoffe, und auch als Beschichtungsmittel gestellt werden, sind vor allem eine gute Haftung auf Oberflächen (Adhäsion) und eine gute innere Festigkeit (Kohäsion), um z.B. einen möglichst festen Verbund der Verklebungen zu erreichen. Diese beiden Anforderungen können kaum gleichermaßen gut erfüllt werden, da viele Maßnahmen, die z.B. eine gute Kohäsion bewirken, sich nachteilig auf die Adhäsion auswirken. So ist dem Fachmann z.B. bekannt, daß die Kohäsion mit steigendem Molekulargewicht zunimmt, die Adhäsion sich jedoch in entsprechendem Ausmaß gleichzeitig verschlechtert.

Als Polymerbasis für Klebstoffe dienen sowohl Polyacrylate als auch Copolymerisate auf Basis von Styrol und Butadien. Zur Verbesserung der Adhäsion wird den Klebstoffen im allgemeinen noch ein sog. klebrigmachendes Harz (Tackifier) zugesetzt.

Aus der US-A-4 438 232 ist ein Haftklebstoff auf Basis eines Copolymeren aus Styrol, Butadien und Alkylacrylaten bekannt. Dieses Copolymerisat soll eine gute Kohäsion und auch eine verbesserte Adhäsion aufweisen. Die Adhäsion und Kohäsion dieses Copolymeren ist jedoch für viele Anwendungen weiter zu verbessern.

Aufgabe der Erfindung waren daher Copolymerisate, die bei der Verwendung als Klebstoffe eine gute Adhäsion und eine gute Kohäsion aufweisen.

Demgemäß wurde das eingangs definierte mindestens zweistufige Copolymerisat, sowie Klebstoffe, Beschichtungsmittel oder Bindemittel, enthaltend dieses Copolymerisat, gefunden.

Das eingangs definierte Copolymerisat ist mindestens zweistufig, vorzugsweise zweistufig aufgebaut. In der ersten Stufe wird ein Monomerengemisch A) polymerisiert, welches vorzugsweise aus
70 - 100 Gew.-% mindestens eines Monomeren a)
0 - 10 Gew.-% mindestens eines Monomeren b)
0 - 5 Gew.-% mindestens eines Monomeren c) und
0 - 30 Gew.-% mindestens eines Monomeren d)
besteht.

Besonders bevorzugt besteht das Monomerengemisch A) aus
70 - 100 Gew.-% mindestens eines Monomeren a)
0 - 5 Gew.-% mindestens eines Monomeren b) und
0 - 30 Gew.-% mindestens eines Monomeren d).

In Gegenwart des in der ersten Stufe erhaltenen Polymerisats wird dann das Monomerengemisch B) der 2. Stufe polymerisiert.

Das Monomerengemisch B) der zweiten Stufe besteht vorzugsweise aus
70 - 100 Gew.-% einer Mischung aus mindestens je einem Monomeren b) und c)
0 - 10 Gew.-% mindestens eines Monomeren a) und
0 - 30 Gew.-% mindestens eines Monomeren d).

Besonders bevorzugt besteht das Monomerengemisch B) aus
90 - 100 Gew.-% einer Mischung aus je mindestens einem Monomeren b) und c),
0 - 5 Gew.-% mindestens eines Monomeren a) und
0 - 5 Gew.-% mindestens eines Monomeren d)
Das Gewichtsverhältnis der Monomeren b) : c) im Monomerengemisch B) beträgt vorzugsweise 10 : 1 bis 1 : 10, besonders bevorzugt 1 : 0,5 bis 1 : 5 und ganz besonders bevorzugt 1 : 1,5 bis 1 : 5.

Der Gewichtsanteil des Monomerengemischs A) beträgt vorzugsweise 2 bis 50 Gew.-%, besonders bevorzugt 2 bis 20 Gew.-% derjenige von B) beträgt vorzugsweise 50 bis 98 Gew.-%, besonders bevorzugt 98 bis 80 Gew.-%, bezogen auf die Summe von A) + B).

Bei Monomeren a) handelt es sich vorzugsweise um C₁-C₈-Alkyl(meth)acrylate. Genannt seien z.B. Methyl(meth)acrylat, Ethyl(meth)acrylat, n- und iso-Propyl(meth)acrylat, n-Butyl(meth)acrylat und 2-Ethylhexyl(meth)acrylat. Ganz besonders bevorzugt sind C₁-C₈-Alkylacrylate.

Monomere b) sind z.B. α-Methylstyrol, p-Methylstyrol und vorzugsweise Styrol.

Als Monomere c) seien Isopren und vorzugsweise Butadien genannt.

Weitere Monomere d) können z.B. (Meth)acrylnitril, C₁-C₁₆-Hydroxyalkyl(meth)acrylate, Vinylether von 1 bis 20 C-Atomen enthaltenden Carbonsäuren wie Vinylacetat, ungesättigte Carbonsäureanhydride mit vorzugsweise 4 bis 5 C-Atomen, wie Maleinsäureanhydrid oder Itaconsäureanhydrid oder ungesättigte Carbonsäuren mit vorzugsweise 3 bis 5 C-Atomen, wie (Meth)acrylsäure, Itaconsäure, Maleinsäure oder Fumarsäure sein.

Besonders bevorzugt sind ungesättigte Carbonsäuren als Monomere d).

Das mindestens zweistufige Copolymerisat wird vorzugsweise hergestellt durch Emulsionspolymerisation. Das Monomerengemisch A) wird dabei in der 1. Stufe in Emulsion polymerisiert, wodurch eine wäßrige Dispersion des entsprechenden Polymeren erhalten wird.

Die Monomeren des Monomerengemischs B) können dann in der 2. Stufe zu dieser wäßrigen Dispersion gegeben und wie A) polymerisiert werden.

Bei der Polymerisation in den einzelnen Stufen können die Monomerengemische A) und B) auf einmal vorgelegt bzw. zugegeben werden; die Zugabe des Monomeren kann in den einzelnen Stufen aber auch im Zulaufverfahren, wobei gegebenenfalls ein Teil der Monomeren vorgelegt wird, erfolgen.

Mit der Polymerisation des Monomerengemischs B) wird erst begonnen, wenn der Restmonomerengehalt bei der Polymerisation des Monomerengemischs A) vorzugsweise unter 10, besonders bevorzugt unter 5, ganz besonders bevorzugt unter 1 Gew.-%, bezogen auf Monomerenmischung A) liegt.

Die Emulsionspolymerisation in den einzelnen Stufen kann wie üblich in Gegenwart eines wasserlöslichen Initiators und eines Emulgators bei vorzugsweise 30 bis 95°C durchgeführt werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol bzw. Alkylphenolen in Betracht.

Die schließlich erhaltene wäßrige Dispersion des erfindungsgemäßen Copolymerisats hat vorzugsweise einen Feststoffgehalt von 20 bis 70 Gew.-%.

Das erfindungsgemäße Copolymerisat bzw. die bei der Emulsionspolymerisation erhaltene wäßrige Dispersion des Copolymerisats eignet sich für alle Verwendungen, bei denen eine gute Adhäsion von Polymeren zu Substratoberflächen und eine gute Kohäsion, d.h. innere Festigkeit von Polymeren gewünscht ist.

Das erfindungsgemäße Copolymerisat zeigt weiterhin ein sehr gutes Durchschlagsverhalten und eignet sich auch daher als Haftklebstoff zur Beschichtung von Papier, insbesondere von Etiketten.

Unter mangelndem Durchschlagverhalten versteht man das Durchfetten, d.h. das Durchdringen des Klebstoffs von der beschichteten zur unbeschichteten Seite.

Des weiteren zeigen Verpackungsklebebänder, insbesondere solche aus Kunststoff, welche mit dem erfindungsgemäßen Copolymerisat beschichtet sind, beim Abrollen von der Rolle niedrige Abrollgeräusche, welche sonst bei industriellen Verpackungsanlagen zu hohen Lärmbelästigungen führen.

Solche Verwendungen sind z.B. Verwendungen als Klebstoff, z.B. auch als Haftklebstoff, oder als Beschichtungsmittel aller Art. Als letztere zu nennen sind z.B. Anstrichfarben, Lederbeschichtungen, Textilbeschichtungen, Teppichbodenrückenbeschichtungen und Papierstreichmittel.

Die Copolymerisate eignen sich auch zum Beschichten von bzw. als Bindemittel für Vliesstoffe, z.B. Nadelvliesstoffe und für Anwendungen in der Bauchemie.

Vliesstoffe, insbesondere Nadelvliesstoffe, die unter Verwendung eines Bindemittels, enthaltend ein erfindungsgemäßes Copolymerisat, verfestigt werden, zeigen eine hervorragende Abriebfestigkeit und Verschleißbeständigkeit. Dies zeigt sich z.B. bei der Messung folgender Eigenschaften eines Nadelvliesbodenbelages: Stuhlrollenversuch (DIN 54 324), Tretradversuch nach Lisson (DIN 54 322).

Die Bindemittel eignen sich für Vliesstoffe auf Basis von z.B. Polypropylen, Polyester, Polyamid, natürlichen Fasern und beliebigen Mischungen aus diesen Fasern. Bei der Verwendung dieser Bindemittel können übliche Additive wie z.B. Verdicker und/oder Füllstoffe zugesetzt werden.

Bei den zu verklebenden oder zu beschichtenden Substraten kann es sich z.B. um Papier, Holz, Textilstoffe, Metall, Kunststoffe, Beton etc. handeln.

### Beispiele

### Emulsionpolymerisat A (zum Vergleich)

Bei 77 ⁰C wurden die Monomeren (s. Tab. 1) in Emulsion unter Verwendung von Na-persulfat als Initiator und einem aliphatischen Na-sulfonat als Emulgator im Zulaufverfahren (6 Stunden Zulauf der Monomeren und 6 Stunden Nachpolymerisation) polymerisiert.

### Emulsionspolymerisate B bis D (zweistufig)

Die Monomeren der Stufe 1 wurden in Gegenwart des obengenannten Initiators und Emulgators 15 Minuten in der Vorlage polymerisiert.

Anschließend wurden die Monomeren der 2 Stufe in Gegenwart der 1. Stufe wie unter A beschrieben polymerisiert.

Die Gewichtsteile der Monomeren sind in Tabelle 1 angegeben.

**Tabelle 1**

| Aufbau der Emulsionspolymerisate | | | | |
|---|---|---|---|---|
| | A | B | C | D |
| Erste Stufe | | | | |
| Butylacrylat | 0 | 3 | 5 | 10 |
| Itakonsäure | 0 | 0,6 | 0,6 | 0,6 |

| Zweite Stufe | | | | |
|---|---|---|---|---|
| Butadien | 69,8 | 66,8 | 64,8 | 59,8 |
| Styrol | 28 | 28 | 28 | 28 |
| t-Dodecylmerkaptan | 2,1 | 2,1 | 2,1 | 2,1 |
| Itakonsäure | 2,2 | 1,6 | 1,6 | 1,6 |

### Anwendungstechnische Prüfung

Zur Prüfung der anwendungstechnischen Eigenschaften wurden die erhaltenen Emulsionen mit einem Auftragsgewicht von ca. 20 g/m² auf Etikettenpapier (80 g/m², Fa. Hering) gerakelt und die beschichteten Folien 3 Minuten bei 90°C im Umluft-Trockenschrank getrocknet. Die beschichteten Folien wurden dann in 2 cm breite Prüfstreifen geschnitten.

Zur Bestimmung der Scherfestigkeit wurden die Klebstreifen mit einer verklebten Fläche 1 x 0,5 inch auf ein chromiertes V2A-Prüfblech geklebt, mit einer 1 kg schweren Rolle 1 mal angerollt, 20 min gelagert und anschließend hängend mit einem 1 kg Gewicht belastet. Das Maß für die Scherfestigkeit war die Zeit bis zum Abfallen des Gewichts; es wurde jeweils der Durchschnitt aus 5 Messungen berechnet (entspricht Prüfmethode PSTC 7).

Die Scherfestigkeit wurde bei 25°C bestimmt.

Zur Bestimmung des Quickstick-Werts wurde aus einem 17,5 cm langen und 2 cm breiten Prüfstreifen durch Einspannen beider Enden in die Klemmbacken einer Zugmaschine eine Schlaufe gebildet, die dann mit einer chromierten Stahloberfläche mit einer Geschwindigkeit von 30 cm/min (Herabsenken der Schlaufe auf das chromierte Stahlblech) in Kontakt gebracht wird. Nach vollflächigem Kontakt wird die Schlaufe sofort wieder abgezogen und die dabei ermittelte Maximalkraft in N/2 cm als Maß für den Quickstick-Wert (Schlingenwert, Tack) bestimmt (entspricht Prüfmethode PSTC 5).

Die Ergebnisse sind in der Tabelle 2 dargestellt.

**Tabelle 2**

| Prüfergebnisse | | | |
|---|---|---|---|
| Emulsionspolymerisat | Gew.-Teile n-Butylacrylat | Quick Stick | Scherfestigkeit |
| A | 0 | 2 N/2 cm | >72 h |
| B | 3 | 10 N/2 cm | >72 h |
| C | 5 | 13 N/2 cm | >72 h |
| D | 10 | 20 N/2 cm | >72 h |

Zum Vergleich seien Prüfergebnisse bei einstufigen Styrol/Butadien/n-Butylacrylat Emulsionspolymerisaten aus der US-A-4 438 232 angeführt.

| Emulsionspolymerisat | Gew.% n-Butylacrylat | Quick Stick | Scherfestigkeit |
|---|---|---|---|
| E 1 | 0 | 5,2 N/2 cm* | >48 h |
| E 3 | 5 | 4,2 N/2 cm | >48 h |
| E 4 | 20 | 5,7 N/2 cm | >48 h |

| | | | |
|---|---|---|---|
| *Werte wurden aus Angaben in US-A-4 438 232 umgerechnet | | | |

Im weiteren wurde der Quickstick und die Schälfestigkeit auf Karton geprüft. Die Prüfung der Schälfestigkeit erfolgte wie vorangehend bei der Scherfestigkeit, wobei der Klebestreifen auf Karton geklebt und in einem Winkel von 180° von der Prüffläche abgezogen wurde.

| Emulsionspolymerisat | Quick Stick | Schälfestigkeit |
|---|---|---|
| C | 2,7 | 6,1 |
| nur 2. Stufe von C*⁾ | 0,8 | 0,2 |
| Mischung 1. Stufe | 1 | 0,9 |
| und 2. Stufe von C**⁾ | | |

*⁾ Emulsionspolymer mit Zusammensetzung der 2. Stufe von C
**⁾ Mischung zweier Emulsionspolymerer mit jeweils den Zusammensetzungen der 1. und 2. Stufe von C im Verhältnis der Stufen wie in C

Zusätzlich wurden die Prüfungen gemäß Tabelle 2 durch Bestimmung der Quick Stick-Werte auf Karton wiederholt.

Zum Vergleich wurde Emulsionspolymerisat E3 hergestellt und der Butylacrylatgehalt BA bei sonst gleicher Zusammensetzung variiert.

| Gew.-% BA | Emulsionspolymerisat | Stufen | Quick Stick N/2 cm |
|---|---|---|---|
| 3 | B | 2 | 1,9 |
| 5 | C | 2 | 2,8 |
| 10 | D | 2 | 3,5 |
| 3 | E3 | 1 | 0,9 |
| 5 | E3 | 1 | 1,3 |
| 10 | E3 | 1 | 1,2 |

### Anwendungsbeispiele zu Papierstreichmassen

Ein Problem, das Drucker, insbesondere im Offset-Druck, beschäftigt, ist das sogenannte Mottling. Unter dem Mottling leidet die Druckqualität. Es kommt durch unterschiedliche Farbannahme durch das Papier zustande. Die Zusammenhänge zwischen Papierqualität und Mottling-Neigung sind bis heute nicht aufgeklärt. Es scheint aber so, als ob den Streichfarben gestrichener Papiere eine besondere Bedeutung zukommt. Es wurde nun gefunden, daß Papiere, die mit Papierstreichmassen gestrichen werden, die als Bindemittel die erfindungsgemäße Dispersion bzw. das erfindungsgemäße Copolymerisat enthalten, sich durch eine besonders gute Bedruckbarkeit (geringes Mottling) auszeichnen.

### Beispiel 1

Herstellung einer erfindungsgemäßen Polymerdispersion auf Basis Styrol-Butadien mit Butylacrylat-Vorlage

### Vorlage:

21,9 kg vollentionisiertes Wasser
0,50 kg Natriumlaurylsulfat, 10 %ig in Wasser
4,35 kg n-Butylacrylat
0,5 kg Styrol
0,15 kg Acrylsäure
1,05 kg von Zulauf 2

### Zulauf 1

26,75 kg vollentionisiertes Wasser
17,5 kg Butadien
31,0 kg Styrol
1,5 kg Acrylsäure
0,5 kg t-Dodecylmercaptan
2,50 kg Natriumlaurylsulfat, 15 %ig in Wasser

### Zulauf 2

0,4 kg Natriumpersulfat
4,85 kg vollentionisiertes Wasser

Die Vorlage wurde auf 85°C erhitzt und 15 min anpolymerisiert. Anschließend wurde der restliche Zulauf 1 während 5 Stunden und gleichzeitig mit Zulauf 1 beginnend Zulauf 2 während 5.5 Stunden zugegeben. Anschließend wurde 2 Stunden bei 85°C nachpolymerisiert. Man erhielt eine Dispersion mit Teilchengröße (Malvern Autosizer) 176 nm und 50 % Feststoffgehalt. Die Glastemperatur betrug 22°C.

### Beispiel 2

Herstellung einer Polymerdispersion auf Basis Butadien ohne Butylacrylat-Vorlage (nicht erfindungsgemäß)

### Vorlage

19,4 kg vollentionisieres Wasser
0,25 kg Natriumlaurylsulfat, 10 %ig in Wasser
3,88 kg Zul. 1
1,05 kg Zul. 2

### Zulauf 1

24,25 kg vollentionisieres Wasser
17,5 kg Butadien
31,0 kg Styrol 1,5 kg Acrylsäure
0,5 kg t-Dodecylmercaptan
2,75 kg Natriumlaurylsulfat, 15 %ig in Wasser

### Zulauf 2

0,4 kg Natriumsulfat
4,85 kg vollentionisiertes Wasser

Die Vorlage wurde auf 85°C erhitzt und 15 min anpolymerisiert. Anschließend wurde der restliche Zulauf 1 während 5 Stunden gleichzeitig mit Zulauf 1 beginnend Zulauf 2 während 5.5 Stunden zugegeben. Anschließend wurde 2 Stunden bei 85°C nachpolymerisiert. Man erhielt eine Dispersion mit Teilchengröße (Malvern Autosizer) 170 nm und 50 % Feststoffgehalt. Die Glastemperatur betrug 17°C.

### Beispiel 3

Herstellung einer Polymerdispersion auf der Basis eines Terpolymerisates aus Styrol, Butadien und Butylacrylat (nicht erfindungsgemäß)

### Vorlage

19,4 kg vollentionisiertes Wasser
0,25 kg Natriumlaurylsulfat, 10 %ig in Wasser
3,88 kg Zul. 1
1,05 kg Zul. 2

### Zulauf 1

24,25 kg vollentionisieres Wasser
13,5 kg Butadien
5,0 kg n-Butylacrylat
30,0 kg Styrol
1,5 kg Acrylsäure
0,5 kg t-Dodecylmercaptan
2,75 kg Natriumlaurylsulfat, 15 %ig in Wasser

### Zulauf 2

0,4 kg Natriumpersulfat
4,75 kg vollentionsiertes Wasser
Die Vorlage wurde auf 85°C erhitzt und 15 min anpolymerisiert. Anschließend wurde der restliche Zulauf 1 während 5 Stunden und gleichzeitig mit Zulauf 1 beginnend Zulauf 2 während 5,5 Stunden zugegeben. Anschließend wurde 2 Stunden bei 85°C nachpolymerisiert. Man erhielt eine Dispersion mit Teilchengröße (Malvern Autosizer) 170 nm und 50 % Feststoffgehalt. Die Glastemperatur betrug 21°C. Die in den Beispielen dargestellten Dispersionen wurden als Bin

demittel in einer Papierstreichmasse der folgenden Zusammensetzung verwendet: 60 Tle feinteilige Kreide
40 Tle feinteiliger Clay
1 Tle eines Natriumsalzes einer Polyacrylsäure mit einem Molekulargewicht von 4000 (Polysalz von BASF)
12 Tle Bindemitteldispersion (aus Beispiel 1 bis 3)

| | |
|---|---|
| Feststoffgehalt: | 66 Gew.-% |
| pH-Wert: | 8,5 bis 9 (eingestellt mit NaOH) |

Als Rohpapier wurde ein holzfreies Streichrohpapier mit einem Flächengewicht von 90 g/m² verwendet. Der Auftrag der Streichmasse erfolgte beidseitig mit jeweils 13 g/m² auf einer Technikumstreichmaschine (Auftragsverfahren: Walze, Dosierverfahren: Blade) mit einer Geschwindigkeit von 1000 m/min. Die Papierbahn wurde mittels einer IR-Trockeneinheit und Lufttrocknung auf eine Papierfeuchte von 5,5 % eingestellt.

Die Papierbahn wurde durch einmaligen Durchlauf durch einen Superkalander geglättet. Dabei betrug der Liniendruck 250 kN/m, die Bahngeschwindigkeit 300 m/min und die Temperatur 80°C.

Zur Beurteilung der Bedruckbarkeit wurden Mottl-Scan-Werte mit Hilfe eines "Tobias-Testers" ermittelt. (Die Meßmethode ist beschrieben in: Philipp E. Tobias et al., Tappie Journal, Vol. 72, Nr. 5, Mai 1989.) Die Mottle-Scan-Werte wurden an einer Farbfläche, die mit einer Farbdeckung von 50 % der maximalen Farbdeckung der Farbe Cyan auf einer 4-Farb-Offsetdruckmaschine im Bogenoffsetdruckverfahren gedruckt wurde, bestimmt. Dabei zeigen hohe Mottle-Scan-Werte eine schlechte Bedruckbarkeit an.

**Tabelle**

| Bindemittel | Mottling-Scan-Wert |
|---|---|
| Beispiel 1 | 425 |
| Beispiel 2 | 623 |
| Beispiel 3 | 595 |

## Patentansprüche

1. Copolymerisat, erhältlich durch Polymerisation (1. Stufe) von
1 - 99 Gew.-% eines Monomerengemischs A) aus
50 - 100 Gew.-% mindestens eines C₁-C₁₆ Alkyl(meth)acrylats a)
0 - 40 Gew.-% mindestens eines Vinylaromaten mit bis zu 20 C-Atomen b)
0 - 30 Gew.-% mindestens eines aliphatischen Diolefins mit bis zu 8 C-Atomen c)
0 - 40 Gew.-% mindestens eines weiteren Monomeren d),
wobei der Gewichtsanteil von b) und c) zusammen maximal 49 Gew.-% beträgt, und
anschließende Polymerisation (2. Stufe) in Gegenwart des aus A) erhaltenen Polymerisats von
1 - 99 Gew.-% eines Monomerengemischs B) aus
50 - 100 Gew.-% einer Mischung aus mindestens je einem Monomeren b) und c)
0 - 40 Gew.-% mindestens eines Monomeren a) und
0 - 40 Gew.-% mindestens eines Monomeren d),
wobei sich die Gewichtsprozente der Monomerengemische A) und B) auf die Summe A) + B) beziehen.

2. Copolymerisat nach Anspruch 1, wobei das Monomerengemisch A) aus
70 - 100 Gew.-% mindestens eines Monomeren a)
0 - 10 Gew.-% mindestens eines Monomeren b)
0 - 5 Gew.-% mindestens eines Monomeren c) und
0 - 30 Gew.-% mindestens eines Monomeren d)
und das Monomerengemisch B) aus
70 - 100 Gew.-% einer Mischung aus mindestens je einem Monomeren b) und c),
0 - 10 Gew.-% mindestens eines Monomeren a)
0 - 30 Gew.-% mindestens eines Monomeren d)
aufgebaut ist.

3. Copoylmerisat nach Anspruch 1 oder 2, wobei das Gewichtsverhältnis der Monomeren b) : c) im Monomerengemisch B) 10:1 bis 1:10 beträgt.

4. Copolymerisat nach einem der Ansprüche 1 bis 3, erhältlich durch Emulsionspolymerisation der Monomerengemische A) und B).

5. Klebstoff, enthaltend ein Copolymerisat gemäß einem der Ansprüch 1 bis 4.

6. Haftklebstoff, enthaltend ein Copolymerisat gemäß einem der Ansprüche 1 bis 4.

7. Beschichtungsmittel, enthaltend ein Copolymerisat gemäß einem der Ansprüche 1 bis 4.

8. Mit einem Beschichtungsmittel gemäß Anspruch 7 beschichtete Substrate.

9. Mit einem Klebstoff gemäß Anspruch 5 verklebter Verbund von Substraten.

10. Bindemittel für Vliesstoffe, enthaltend ein Copolymerisat gemäß einem der Ansprüche 1 bis 4.

11. Bindemittel für Papierstreichmassen, enthaltend ein Copolymerisat gemäß einem der Ansprüche 1 bis 4.

12. Mit einem Bindemittel gemäß Anspruch 10 gebundene Vliesstoffe.

13. Mit Papierstreichmassen gemäß Anspruch 11 beschichtete Papiere.
